# EUROPEAN PATENT SPECIFICATION

(11) **EP 1 489 333 B1**
(45) Date of publication and mention of the grant of the patent: **08.02.2006**
(21) Application number: 04014350.5
(22) Date of filing: 18.06.2004
(51) Int. Cl.: F16F 9/12

(54) **Rotational damper**
Rotationsdämpfer
Amortisseur rotatif

(30) Priority: 19.06.2003 JP 2003175121; 10.07.2003 JP 2003272989
(43) Date of publication of application: 22.12.2004
(73) Proprietor: NIFCO INC., Yokohama-shi, 244-8522 (JP)
(72) Inventor: Nishiyama, Masayuki, Chigasaki-shi Kanagawa-ken (JP)
(74) Representative: Banzer, Hans-Jörg

(56) References cited:
- EP-A- 1 275 683
- US-A- 4 614 004
- US-A- 5 984 057

## Description

### Background of the Invention and Related Art Statement

The present invention relates to a rotational damper for damping rotation of a driven gear engaging a gear or a rack.

A rotational damper is generally formed of a housing; a viscous fluid filled inside the housing; a rotor rotatably housed in the housing and having a rotating shaft with one end protruding from the housing and the lower end connected to a rotor damping plate; and a seal member disposed between the housing and the rotating shaft for preventing leakage of the viscous fluid to the outside of the housing. A driven gear is attached to the rotating shaft protruding from the housing so as to rotate together.

In the rotational damper, silicon oil used as the viscous fluid has a small viscosity change according to a temperature, and is a superior material for obtaining damping torque relative to the rotor damping plate.

However, when the seal member, for example an O-ring, made of silicon rubber or the like is used, silicon oil permeates the seal member and the seal member is swollen. As a result, frictional resistance is generated between the housing and the rotating shaft, thereby affecting the damping torque.

Accordingly, the seal member is formed of self-lubricating silicon rubber, thereby reducing a dimensional change and the influence on the damping torque caused by the frictional resistance between the housing and the rotating shaft (refer to Japanese Patent No. 2808118, column 5 line 2 to column 5 line 6, or to document DE-A-3921326.

However, even when the seal member is made of a self-lubricating silicon rubber, silicon oil still permeates the seal member. Since the seal member contacts the housing and the rotating shaft, when the rotating shaft rotates, resistance is generated due to silicon oil permeating the seal member. In particular, at a low temperature, there may be a great influence on the damping torque, for example, such that the damping torque may become great enough that the rotating shaft no longer rotates.

In view of the problems mentioned above, the present invention has been made, and an object of the invention is to provide a rotational damper in which a torque change caused by a seal member with a temperature can be reduced, so that the rotational damper can be used without a problem even in a cold region.

US patent 4,614,004 describes a rotational damper according to the preamble of claim 1. The damper includes a flexible membrane interposed between a housing and a braking disk and adapted to absorb thermal expansion of oil and produce a sealing effect. The flexible membrane is formed of a material of small thermal deformation such as synthetic rubber or a flexible plastic substance like polyethylene or polypropylene.

In EP 1 275 683 A1, a molded fluoroelastomer is described which has an excellent detachability. The elastomer may be used for producing sealing materials such as an O-ring. For obtaining the improved detachability, a surface of an article produced from the elastomer is roughened to not less than a certain degree.

### Summary of the invention

The above object is achieved by a rotational damper according to claim 1. The dependent claims define preferred and advantageous embodiments of the invention.

According to the present invention, a rotational damper includes a housing; silicon oil as a viscous fluid filled inside the housing; a rotor rotatably housed in the housing and having a rotating shaft with one end protruding from the housing and a rotor damping plate connected to a lower end of the rotating shaft; and a seal member disposed between the housing and the rotating shaft for preventing leakage of the viscous fluid to the outside of the housing, wherein the seal member is made of a material having non-swelling property relative to the viscous fluid.

The seal member is made of ethylene-propylene rubber, chloroprene-rubber, of fluorine rubber.

Further, it is desirable that a surface of the seal member be applied with a pear-skin finish.

### Brief Description of the Drawings

Fig. 1 is a plan view of a rotational damper according to an embodiment of the invention;
Fig. 2 is a sectional view along line 2-2 in Fig. 1;
Fig. 3 is a graph showing torque characteristics when a rotational damper of the invention and a conventional rotational damper are used at 23°C and -30°C;
Fig. 4 is a graph showing torque change characteristics of a rotational damper of the invention and a conventional rotational damper when used at -30°C relative to 23°C;
Fig. 5 is a graph showing torque characteristics of O-rings according to the invention when used at 23°C, in cases that the O-ring in the rotational damper has a polished surface and has compression amounts of 10%, 15% and 20%, and in cases that the 0-ring in the rotational damper of the invention has a surface applied with a pear-skin finish by blasting with #320 grit abrasive material and has compression amounts of 10%, 15% and 20%;
Fig. 6 is a graph showing torque characteristics of 0-rings according to the invention when used at -30°C, in cases that the O-ring in the rotational damper has a polished surface and has compression amounts of 10%, 15% and 20%, and in cases that the O-ring in the rotational damper of the invention has a surface applied with a pear-skin finish by blasting with #320 grit abrasive material and has compression amounts of 10%, 15% and 20%;
Fig. 7 is a graph showing torque change characteristics of the 0-rings with the compression amounts of 10%, 15% and 20% shown in Fig. 6 relative to the O-rings with the compression amounts of 10%, 15%, and 20% shown in Fig. 5;
Fig. 8 is a graph showing torque characteristics of conventional O-rings when used at 23°C, in cases that the O-ring in the rotational damper has a polished surface and has compression amounts of 10%, 15% and 20%, and in cases that the O-ring in the rotational damper of the conventional damper has a surface applied with a pear-skin finish by blasting with #320 grit abrasive material and has compression amounts of 10%, 15%, and 20%;
Fig. 9 is a graph showing torque characteristics of conventional 0-rings when used at -30°C, in cases that the O-ring in the rotational damper has a polished surface and has a compression amounts of 10%, 15% and 20%, and in cases that the O-ring in the rotational damper of the conventional damper has a surface applied with a pear-skin finish by blasting with #320 grit abrasive material and has compression amounts of 10%, 15%, and 20%;
Fig. 10 is a graph showing torque change characteristics of the O-rings with the compression amounts of 10%., 15%, and 20% shown in Fig. 9 relative to the O-rings with the compression amounts of 10%, 15%, and 20% shown in Fig. 8; and
Fig. 11 is a graph showing torque change characteristics of the O-rings in the rotational damper of the invention with surfaces applied with a pear-skin finish by blasting with #400 or #240 grit abrasive material and having compression amounts of 10%, 15%, and 20%, relative to the O-rings in the rotational damper of the invention with polished surfaces and having compression amounts of 10%, 15%, and 20%.

### Detailed Description of Preferred Embodiments

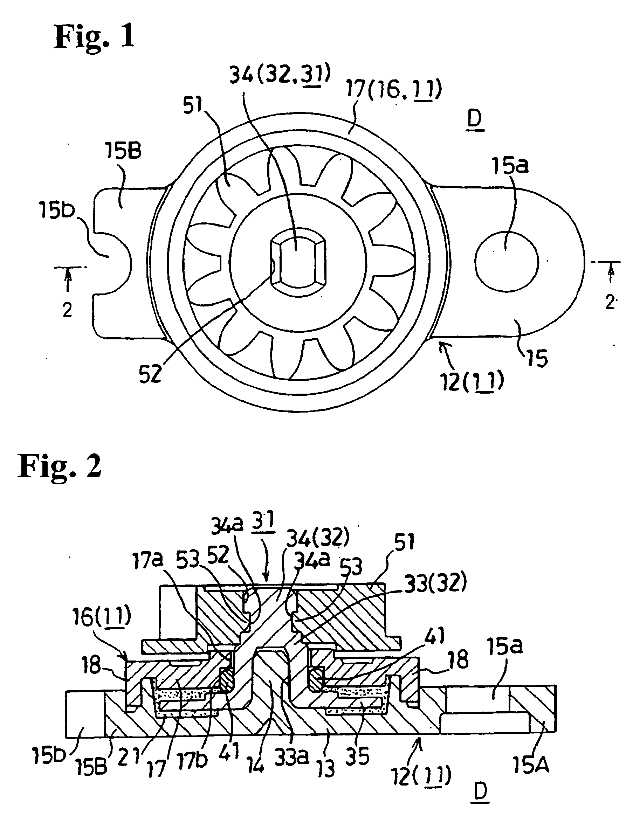

Hereunder, embodiments of the present invention will be explained with reference to the accompanying drawings. Fig. 1 is a plan view of a rotational damper according to an embodiment of the invention. Fig. 2 is a sectional view along line 2-2 in Fig. 1.

In the drawings, a rotational damper D is formed of a housing 11; silicon oil 21 as a viscous fluid filled inside the housing 11; a rotor 31 rotatably housed in the housing 11 and having a rotating shaft 32 with one end protruding from the housing 11 and a rotor damping plate 35 connected to a lower end of the rotating shaft 32; an O-ring 41 as a seal member disposed between the housing 11 and the rotating shaft 32 for preventing leakage of silicon oil 21 to the outside of the housing 11; and a driven gear 51 installed on the part of the rotating shaft 32 protruding from the housing 11.

The above-mentioned housing 11 is formed of a housing main body 12 made of a synthetic resin and a cap 16 made of a synthetic resin. Also, the housing main body 12 is formed of a cylindrical part 13 with a bottom; a support shaft 14 with a circular section connected to the center of the cylindrical part 13 and protruding upwardly above the cylindrical part 13; and fixing pieces 15A and 15B connected at mutually opposite outside positions on the cylindrical part 13 so as to extend outwardly in the radial direction. A fixing hole 15a is provided in the fixing piece 15A, and a fixing indentation 15b is provided in the fixing piece 15B. The cap 16 has a circular ceiling plate 17 having a circular pass-through hole 17a at the center thereof for passing through the rotating shaft 32, and an O-ring receiving part 17b connected to a lower part of the pass-through hole 17a coaxially with the pass-through hole 17a and having a stepped shape with a diameter larger than that of the pass-through hole 17a; and a perimeter wall 18 formed around a perimeter of the ceiling plate 17 and having an inside portion engaging the cylindrical part 13.

The above-mentioned rotor 31 is formed of a synthetic resin, and includes a rotating shaft 32 with one part protruding from the housing 11, and a rotor damping plate 35 connected to a lower end of the rotating shaft 32 and rotatably housed inside the housing 11. The rotating shaft 32 includes a large-diameter shaft part 33 having a shaft coupling part 33a having a cylindrical cavity for inserting the support shaft 14 from below so as to be rotatable, and an installation shaft part 34 connected coaxially to an upper portion of the large-diameter shaft part 33 so that the driven gear 51 is installed thereto so as to rotate together. The installation shaft part 34 is formed in an I-cut shape so that the driven gear 51 rotates together, and has locking indentations 34a provided on lower parts of parallel surfaces thereof, respectively. The rotor damping plate 35 is formed in a circular shape coaxial with the large-diameter shaft part 33, and is provided on an outer perimeter of the lower end of the large-diameter shaft part 33.

The above-mentioned O-ring 41 as the seal member is formed of a material having non-swelling property relative to silicon oil 21, for example, ethylene-propylene rubber. The driven gear 51 is provided with an installation hole 52 having coupling parts 53 corresponding to the locking indentations 34a on an inner perimeter surface thereof.

An example of assembly of the rotational damper will be explained next. First, after the housing main body 12 is placed on, for example, a work bench, in a state that the open end of the cylindrical part 13 faces upwardly, the support shaft 14 is inserted into the shaft receiving part 33a of the large-diameter shaft part 33 constituting the rotating shaft 32, so that the rotor damping plate 35 is housed inside the cylindrical part 13 so as to be rotatable. Next, a suitable quantity of silicon oil 21 is poured (filled) into the cylindrical part 13.

After the 0-ring 41 is installed inside the O-ring receiving part 17b of the ceiling plate 17, the perimeter wall 18 is turned downwardly and the large-diameter shaft part 33 is pressed into the O-ring 41 from the side of the installation shaft part 34. The installation shaft part 34 is passed through the pass-through hole 17a to protrude from the ceiling plate 17, and the cylindrical part 13 is fitted into the perimeter wall 18. The cap 16 is attached to the housing main body 12 in this manner, so that the O-ring 41 is pressed and deformed by the ceiling plate 17 and the large-diameter shaft part 33, thereby sealing the space between the housing 11 (cap 16) and the rotor 31. Accordingly, silicon oil 21 is prevented from leaking to the outside of the housing 11 from the space between the housing 11 and the rotor 31.

Next, the perimeter wall 18 is welded around the cylindrical part 13 with, for example, ultrasonic welding, thereby preventing silicon oil 21 from leaking to the outside of the housing 11 from the space between the cylindrical part 13 and the perimeter wall 18, and the cap 16 is installed and fixed on the housing main body 12. The side of the coupling parts 53 is turned downwardly, and the installation shaft part 34 is pressed into the installation hole 52 while the coupling parts 53 correspond to the locking indentations 34a. Accordingly, the coupling parts 53 engage the locking indentations 34a, so that the driven gear 51 does not come off from the rotating shaft 32 and rotates together with the rotating shaft 32.

The rotational damper D assembled in this manner can be installed in a desired location by using the fixing hole 15a and fixing indentation 15b of the fixing pieces 15A and 15B, and the driven gear 51 can engage a gear, rack, or the like, for applying damping.

An operation of the rotational damper D will be explained next. First, when rotational force is applied to the driven gear 51 of the rotational damper D assembled and installed as shown in Fig. 1 and Fig. 2, the rotor damping plate 35 rotates inside the housing 11 filled with silicon oil 21. When the rotor damping plate 35 rotates within silicon oil 21, the rotation of the driven gear 51 is damped by actions of viscosity resistance and shear resistance of silicon oil 21 on the rotor damping plate 35. Accordingly, the rotational damper D damps the rotation or movement of the gear, rack, or the like, engaging the driven gear 51, and the rotation or movement slows down.

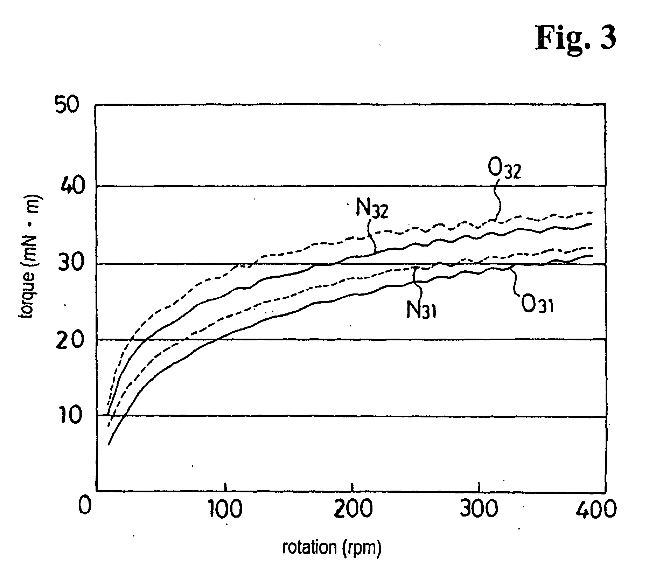

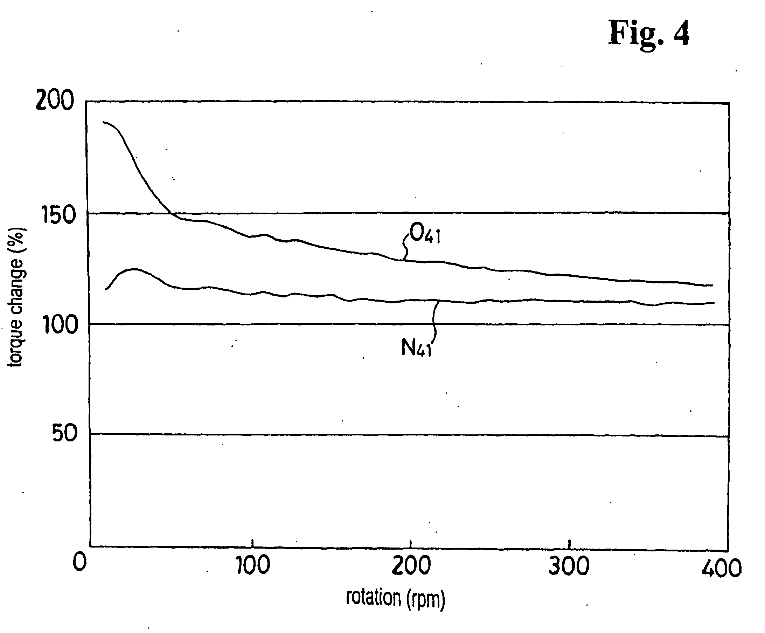

Fig. 3 is a graph showing torque characteristics when a rotational damper of the invention and a conventional rotational damper are used at 23°C and -30°C. The vertical axis in Fig. 3 is torque (mN·m), and the horizontal axis is rotational speed (rpm). Here, the rotational damper of the invention uses the O-ring made of ethylene-propylene rubber as the seal member (also in Fig. 4). The conventional rotational damper uses an O-ring made of self-lubricating silicon rubber as the seal member (also in Fig. 4). The parts other than the 0-rings are the same both in the rotational damper of the invention and the conventional rotational damper (same in the following description).

In Fig. 3, N₃₁ is the torque characteristic curve when the rotational damper of the invention was used at 23°C, and N₃₂ is the torque characteristic curve when the rotational damper of the invention was used at -30°C. O₃₁ is the torque characteristic curve when the conventional rotational damper was used at 23°C, and O₃₂ is the torque characteristic curve when the conventional rotational damper was used at -30°C.

Fig. 4 is a graph showing torque change characteristics of a rotational damper of the invention and a conventional rotational damper when used at -30°C relative to 23°C. The vertical axis in Fig. 4 is torque change rate (%), and the horizontal axis is rotational speed (rpm).

In Fig. 4, N₄₁ is the torque change rate characteristic curve showing the change rate of the torque of the rotational damper of the invention when used at -30°C over the torque when used at 23°C, and O₄₁ is the torque change rate characteristic curve showing the change rate of the torque of the conventional rotational damper when used at -30°C over the torque when used at 23°C.

The torque change rates of the torque characteristic curves N₃₂ and O₃₂ in Fig. 3 over the torque characteristic curves N₃₁ and O₃₁ in Fig. 3 become the torque change rate characteristic curves N₄₁ and O₄₁ in Fig. 4. It is clear that the rotational damper of the invention shows the torque change rate smaller than the conventional rotational damper.

According to the embodiment of the invention described above, the 0-ring is made of ethylene-propylene rubber having non-swelling property relative to silicon oil. Accordingly, it is possible to reduce the torque change caused by the seal member over a temperature change, so that the rotational damper can be used without a problem even in cold regions.

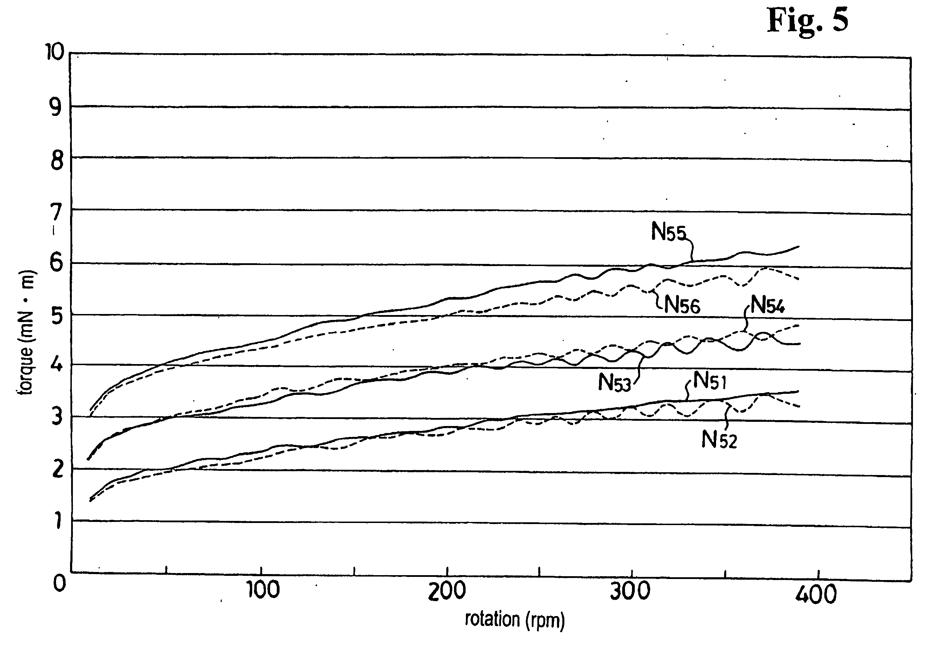

Fig. 5 is a graph showing torque characteristics of O-rings according to the invention when used at 23°C, in cases that the O-ring in the rotational damper has a polished surface and has a compression amount of 10%, 15% or 20%, and in cases that the 0-ring in the rotational damper of the invention has a surface applied with a pear-skin finish (small projections on a surface) by blasting with #320 grit abrasive material and has a compression amount of 10%, 15% or 20%. The vertical axis in Fig. 5 is torque (mN-m), and the horizontal axis is rotational speed (rpm).

In Fig. 5, N₅₁ is the torque characteristic curve when used at 23°C in a case that the O-ring has the polished surface and the amount of compression is 10%. N₅₂ is the torque characteristic curve when used at 23°C in a case that the O-ring has the surface applied with a pear-skin finish by blasting with #320 grit abrasive material and the amount of compression is 10%. N₅₃ is the torque characteristic curve when used at 23°C in a case that the O-ring has the polished surface and the amount of compression is 15%. N₅₄ is the torque characteristic curve when used at 23°C in a case that the O-ring has the surface applied with a pear-skin finish by blasting with #320 grit abrasive material and the amount of compression is 15%. N₅₅ is the temperature characteristic curve when used at 23°C in a case that the O-ring has the polished surface and the amount of compression is 20%. N₅₆ is the temperature characteristic curve when used at 23°C in a case that the O-ring has the surface applied with a pear-skin finish by blasting with #320 grit abrasive material and the amount of compression is 20%.

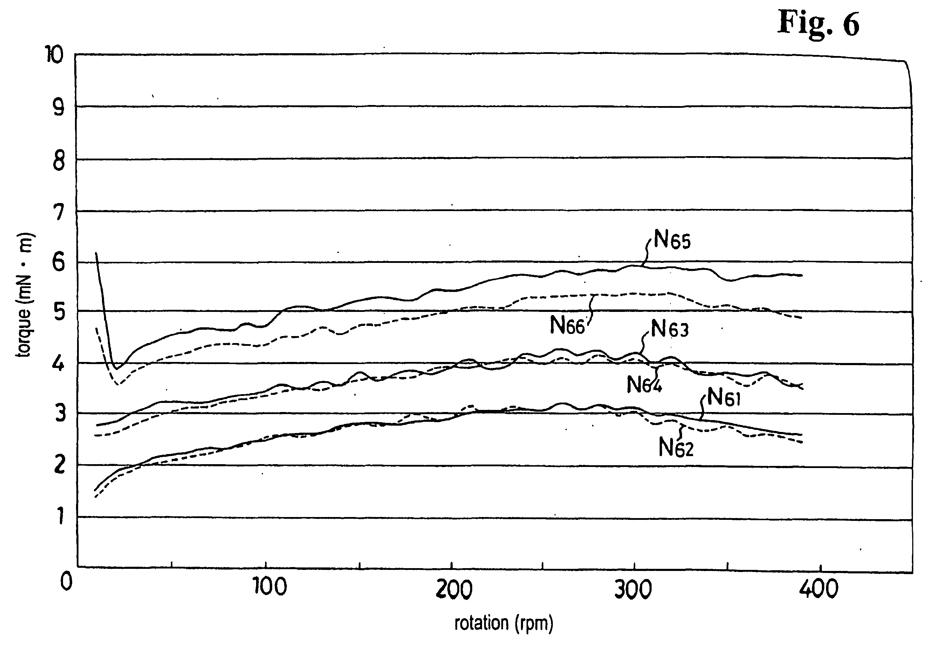

Fig. 6 is a graph showing torque characteristics of O-rings according to the invention when used at -30°C, in cases that the O-ring in the rotational damper has a polished surface and has a compression amount of 10%, 15%, or 20%, and in cases that the 0-ring in the rotational damper of the invention has a surface applied with a pear-skin finish by blasting with #320 grit abrasive material and has a compression amount of 10%, 15%, or 20%. The vertical axis in Fig. 6 is torque (mN.m), and the horizontal axis is rotational speed (rpm).

In Fig. 6, N₆₁ is the torque characteristic curve when used at -30°C in a case that the O-ring has the polished surface and the amount of compression is 10%. N₆₂ is the torque characteristic curve when used at -30°C in a case that the O-ring has the surface applied with a pear-skin finish by blasting with #320 grit abrasive material and the amount of compression is 10%. N₆₃ is the torque characteristic curve when used at - 30°C in a case that the O-ring has the polished surface and the amount of compression is 15%. N₆₄ is the torque characteristic curve when used at -30°C in a case that the O-ring has the surface applied with a pear-skin finish by blasting with #320 grit abrasive material and the amount of compression is 15%. N₆₅ is the temperature characteristic curve when used at -30°C in a case that the O-ring has the polished surface and the amount of compression is 20%. N₆₆ is the temperature characteristic curve when used at -30°C in a case that the 0-ring has the surface applied with a pear-skin finish by blasting with #320 grit abrasive material and the amount of compression is 20%.

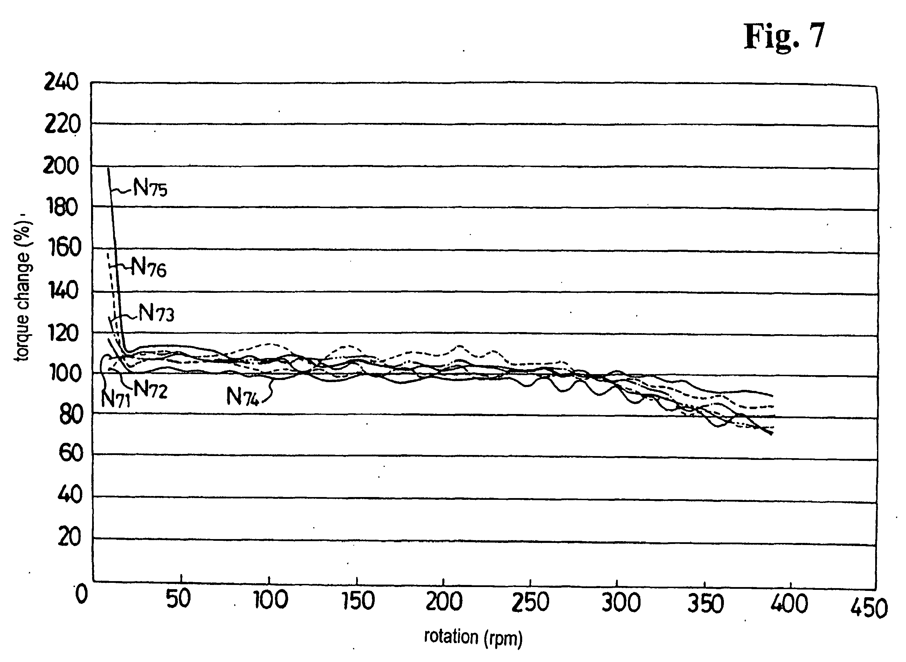

Fig. 7 is a graph showing torque change characteristics of the 0-rings with the compression amounts of 10%, 15%, and 20% shown in Fig. 6 relative to the O-rings with the compression amounts of 10%, 15%, and 20% shown in Fig. 5. The vertical axis in Fig. 7 is torque change rate (%), and the horizontal axis is rotational speed (rpm).

In Fig. 7, N₇₁ is the torque change rate characteristic curve showing the change rate of the torque characteristic curve N₆₁ shown in Fig. 6 when used at -30°C with the surface of the O-ring being polished and the amount of compression being made 10%, over the torque characteristic curve N₅₁ shown in Fig. 5 when used at 23°C with the surface of the O-ring being polished and the amount of compression being made 10%. N₇₂ is the torque change rate characteristic curve showing the change rate of the torque characteristic curve N₆₂ shown in Fig. 6 when used at - 30°C with the surface of the 0-ring being applied with a pear-skin finish by blasting with #320 grit abrasive material and the amount of compression being made 10%, over the torque characteristic curve N₅₂ shown in Fig. 5 when used at 23°C with the surface of the O-ring being applied with a pear-skin finish by blasting with #320 grit abrasive material and the amount of compression being made 10%.

N₇₃ is the torque change rate characteristic curve showing the change rate of the torque characteristic curve N₆₃ shown in Fig. 6 when used at -30°C with the surface of the O-ring being polished and the amount of compression being made 15%, over the torque characteristic curve N₅₃ shown in Fig. 5 when used at 23°C with the surface of the O-ring being polished and the amount of compression being made 15%. N₇₄ is the torque change rate characteristic curve showing the change rate of the torque characteristic curve N₆₄ shown in Fig. 6 when used at -30°C with the surface of the O-ring being applied with a pear-skin finish by blasting with #320 grit abrasive material and the amount of compression being made 15%, over the torque characteristic curve N₅₄ shown in Fig. 5 when used at 23°C with the surface of the O-ring being applied with a pear-skin finish by blasting with #320 grit abrasive material and the amount of compression being made 15%.

N₇₅ is the torque change rate characteristic curve showing the change rate of the torque characteristic curve N₆₅ shown in Fig. 6 when used at -30°C with the surface of the O-ring being polished and the amount of compression being made 20%, over the torque characteristic curve N₅₅ shown in Fig. 5 when used at 23°C with the surface of the O-ring being polished and the amount of compression being made 20%. N₇₆ is the torque change rate characteristic curve showing the change rate of the torque characteristic curve and N₆₆ shown in Fig. 6 when used at -30°C with the surface of the O-ring being applied with a pear-skin finish by blasting with #320 grit abrasive material and the amount of compression being made 20%, over the torque characteristic curve N₅₆ shown in Fig. 5 when used at 23°C with the surface of the O-ring being applied with a pear-skin finish by blasting with #320 grit abrasive material and the amount of compression being made 20%.

As apparent from the torque characteristic curves N₅₁-N₅₆ and N₆₁-N₆₆ in Fig. 5 and Fig. 6, in the cases when the amount of compression of the O-ring in the rotational damper of the invention is smaller, the torque is smaller and the torque is about the same whether the surface of the O-ring is polished or the surface of the 0-ring is applied with a pear-skin finish by blasting with #320 grit abrasive material. However, in the cases when the amount of compression of the O-ring is greater, the torque is greater and the torque becomes smaller when the surface of the O-ring is applied with a pear-skin finish by blasting with #320 grit abrasive material than when the surface of the 0-ring is polished. Also, as apparent from the torque change rate characteristic curves N₇₁-N₇₆ shown in Fig. 7, in the cases when the rotational speed is low, the torque change rate is greater as the amount of compression of the O-ring is greater, and it becomes smaller when the surface of the O-ring is applied with a pear-skin finish by blasting with #320 grit abrasive material. Accordingly, it is clear that the torque change rate can be smaller by applying the surface of the O-ring in the rotational damper of the invention with a pear-skin finish.

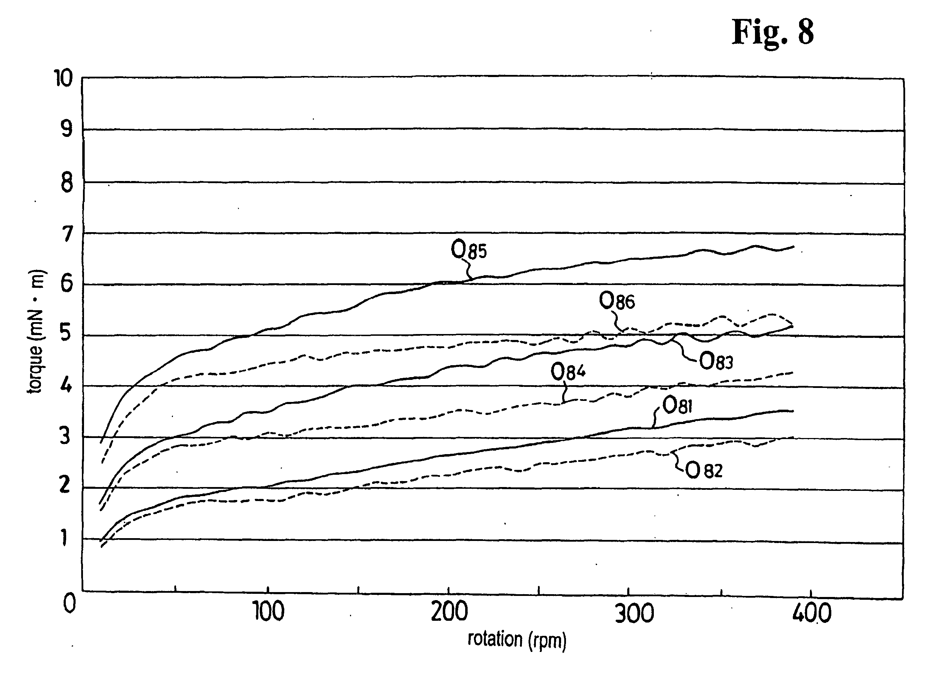

Fig. 8 is a graph showing torque characteristics of conventional O-rings when used at 23°C, in cases that the O-ring in the rotational damper has a polished surface and has a compression amount of 10%, 15%, or 20%, and in cases that the O-ring in the conventional rotational damper has a surface applied with a pear-skin finish by blasting with #320 grit abrasive material and has a compression amount of 10%, 15%, or 20%. The vertical axis in Fig. 8 is torque (mN.m), and the horizontal axis is rotational speed (rpm).

In Fig. 8, N₈₁ is the torque characteristic curve when used at 23°C in a case that the 0-ring has the polished surface and the amount of compression is 10%. N₈₂ is the torque characteristic curve when used at 23°C in a case that the 0-ring has the surface applied with a pear-skin finish by blasting with #320 grit abrasive material and the amount of compression is 10%. N₈₃ is the torque characteristic curve when used at 23°C in a case that the O-ring has the polished surface and the amount of compression is 15%. N₈₄ is the torque characteristic curve when used at 23°C in a case that the O-ring has the surface applied with a pear-skin finish by blasting with #320 grit abrasive material and the amount of compression is 15%. N₈₅ is the temperature characteristic curve when used at 23°C in a case that the O-ring has the polished surface and the amount of compression is 20%. N₈₆ is the temperature characteristic curve when used at 23°C in a case that the O-ring has the surface applied with a pear-skin finish by blasting with #320 grit abrasive material and the amount of compression is 20%.

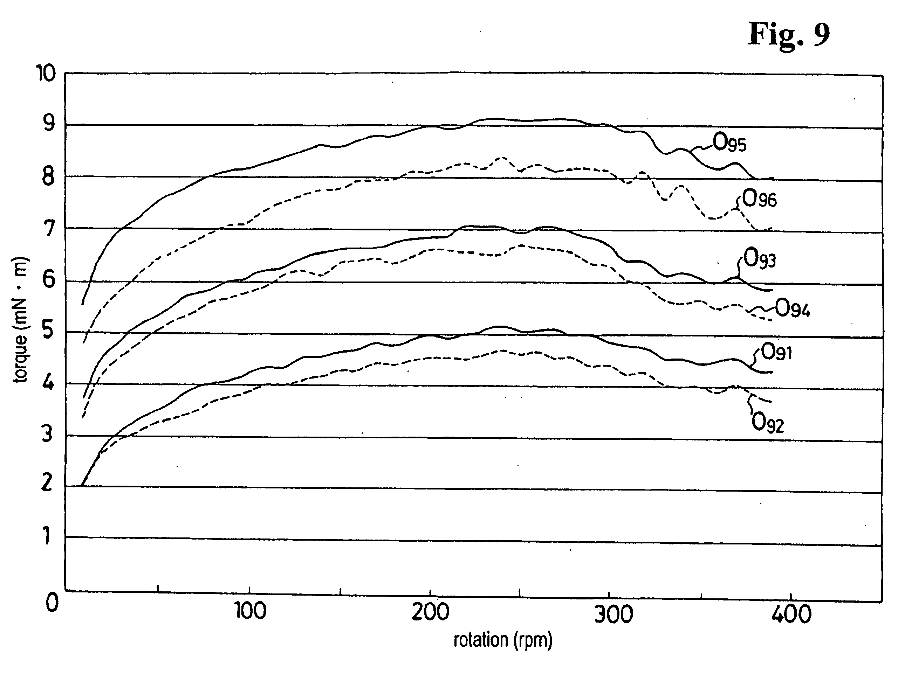

Fig. 9 is a graph showing torque characteristics of conventional O-rings when used at -30°C, in cases that the O-ring in the rotational damper has a polished surface and has a compression amount of 10%, 15%, or 20%, and in cases that the O-ring in the conventional rotational damper has a surface applied with a pear-skin finish by blasting with #320 grit abrasive material and has a compression amount of 10%, 15%, or 20%. The vertical axis in Fig. 9 is torque (mN·m), and the horizontal axis is rotational speed (rpm).

In Fig. 9, N₉₁ is the torque characteristic curve when used at -30°C in a case that the O-ring has the polished surface and the amount of compression is 10%. N₉₂ is the torque characteristic curve when used at -30°C in a case that the O-ring has the surface applied with a pear-skin finish by blasting with #320 grit abrasive material and the amount of compression is 10%. N₉₃ is the torque characteristic curve when used at - 30°C in a case that the O-ring has the polished surface and the amount of compression is 15%. N₉₄ is the torque characteristic curve when used at -30°C in a case that the O-ring has the surface applied with a pear-skin finish by blasting with #320 grit abrasive material and the amount of compression is 15%. N₉₅ is the temperature characteristic curve when used at -30°C in a case that the O-ring has the polished surface and the amount of compression is 20%. N₉₆ is the temperature characteristic curve when used at -30°C in a case that the 0-ring has the surface applied with a pear-skin finish by blasting with #320 grit abrasive material and the amount of compression is 20%.

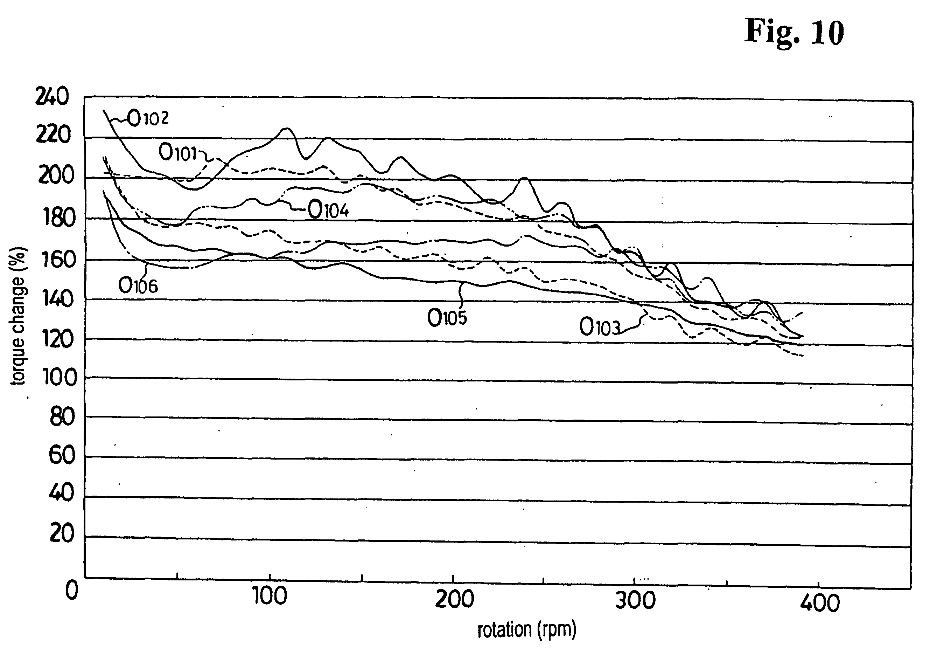

Fig. 10 is a graph showing torque change characteristics of the O-rings with the compression amounts of 10%, 15%, and 20% shown in Fig. 9 relative to the O-rings with the compression amounts of 10%, 15%, and 20% shown in Fig. 8. The vertical axis in Fig. 10 is torque change rate (%), and the horizontal axis is rotational speed (rpm).

In Fig. 10, O₁₀₁ is the torque change rate characteristic curve showing the change rate of the torque characteristic curve O₉₁ shown in Fig. 9 when used at -30°C with the surface of the O-ring being polished and the amount of compression being made 10%, over the torque characteristic curve O₈₁ shown in Fig. 8 when used at 23°C with the surface of the O-ring being polished and the amount of compression being made 10%. O₁₀₂ is the torque change rate characteristic curve showing the change rate of the torque characteristic curve O₉₂ shown in Fig. 9 when used at - 30°C with the surface of the O-ring being applied with a pear-skin finish by blasting with #320 grit abrasive material and the amount of compression being made 10%, over the torque characteristic curve O₈₂ shown in Fig. 8 when used at 23°C with the surface of the O-ring being applied with a pear-skin finish by blasting with #320 grit abrasive material and the amount of compression being made 10%.

O₁₀₃ is the torque change rate characteristic curve showing the change rate of the torque characteristic curve O₉₃ shown in Fig. 9 when used at -30°C with the surface of the O-ring being polished and the amount of compression being made 15%, over the torque characteristic curve O₈₃ shown in Fig. 8 when used at 23°C with the surface of the O-ring being polished and the amount of compression being made 15%. O₁₀₄ is the torque change rate characteristic curve showing the change rate of the torque characteristic curve O₉₄ shown in Fig. 9 when used at -30°C with the surface of the O-ring being applied with a pear-skin finish by blasting with #320 grit abrasive material and the amount of compression being made 15%, over the torque characteristic curve O₈₄ shown in Fig. 8 when used at 23°C with the surface of the O-ring being applied with a pear-skin finish by blasting with #320 grit abrasive material and the amount of compression being made 15%.

O₁₀₅ is the torque change rate characteristic curve showing the change rate of the torque characteristic curve O₉₅ shown in Fig. 9 when used at -30°C with the surface of the O-ring being polished and the amount of compression being made 20%, over the torque characteristic curve O₈₅ shown in Fig. 8 when used at 23°C with the surface of the O-ring being polished and the amount of compression being made 20%. O₁₀₆ is the torque change rate characteristic curve showing the change rate of the torque characteristic curve O₉₆ shown in Fig. 9 when used at -30°C with the surface of the O-ring being applied with a pear-skin finish by blasting with #320 grit abrasive material and the amount of compression being made 20%, over the torque characteristic curve O₈₆ shown in Fig. 8 when used at 23°C with the surface of the O-ring being applied with a pear-skin finish by blasting with #320 grit abrasive material and the amount of compression being made 20%.

As apparent from the torque characteristic curves O₈₁-O₈₆ and O₉₁-O₉₆ in Fig. 8 and Fig. 9, in the conventional rotational damper, the torque becomes smaller in the cases when the surface of the 0-ring is applied with a pear-skin finish by blasting with #320 grit abrasive material than when the surface of the 0-ring is polished. However, as apparent from the torque change rate characteristic curves O₁₀₁-O₁₀₆ in Fig. 10, while the torque change rate is improved overall as the rotational speed increases, the torque change rate is not improved better than the corresponding torque change rate characteristic curves N₇₁-N₇₆ in Fig. 7.

According to another embodiment of the invention as described above, the O-ring is made of ethylene-propylene rubber having non-swelling property relative to silicon oil and the surface of the 0-ring is applied with a pear-skin finish. Accordingly, it is possible to reduce the torque change caused by the seal member over a temperature change, so that the rotational damper can be used without a problem even in cold regions.

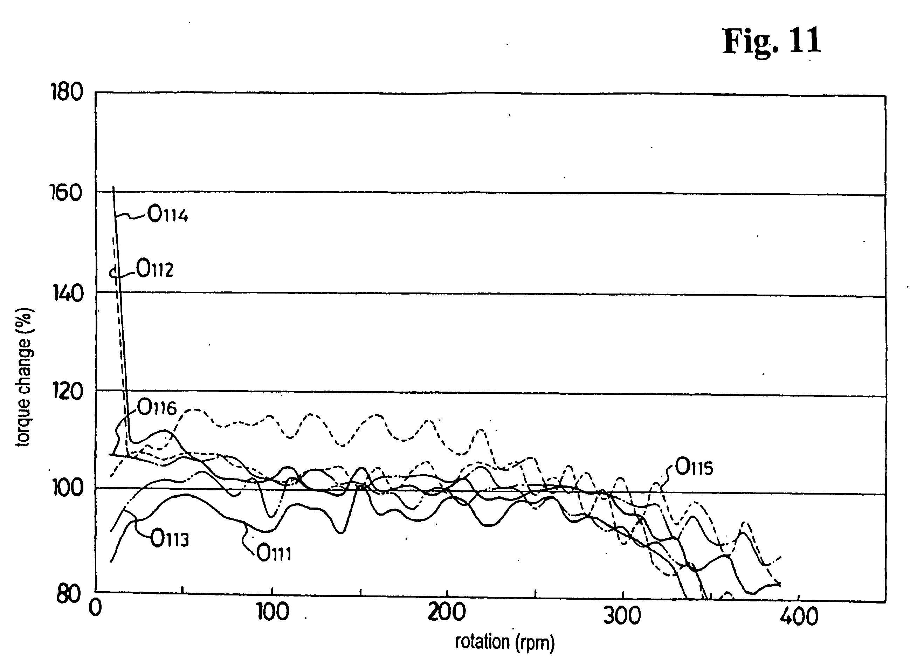

Fig. 11 is a graph showing torque change characteristics of the 0-rings in the rotational damper of the invention with surfaces applied with a pear-skin finish by blasting with #400 or #240 grit abrasive material and having compression amounts of 10%, 15%, and 20%, relative to the O-rings in the rotational damper of the invention with polished surfaces and having compression amounts of 10%, 15%, and 20%. The vertical axis in Fig. 11 is torque change rate (%), and the horizontal axis is rotational speed (rpm).

In Fig. 11, N₁₁₁ is the torque change rate characteristic curve showing the change rate of the torque characteristic curve when used at -30°C with the surface of the O-ring being applied with a pear-skin finish by blasting with #400 grit particle size abrasive material and the amount of compression being made 10%, over the torque characteristic curve when used at 23°C with the surface of the O-ring being polished and the amount of compression being made 10%. N₁₁₂ is the torque change rate characteristic curve showing the change rate of the torque characteristic curve when used at -30°C with the surface of the O-ring being applied with a pear-skin finish by blasting with #240 grit particle size abrasive material and the amount of compression being made 10%, over the torque characteristic curve when used at 23°C with the surface of the O-ring being polished and the amount of compression being made 10%.

N₁₁₃ is the torque change rate characteristic curve showing the change rate of the torque characteristic curve when used at -30°C with the surface of the O-ring being applied with a pear-skin finish by blasting with #400 grit particle size abrasive material and the amount of compression being made 15%, over the torque characteristic curve when used at 23°C with the surface of the O-ring being polished and the amount of compression being made 15%. N₁₁₄ is the torque change rate characteristic curve showing the change rate of the torque characteristic curve when used at -30°C with the surface of the O-ring being applied with a pear-skin finish by blasting with #240 grit particle size abrasive material and the amount of compression being made 15%, over the torque characteristic curve when used at 23°C with the surface of the O-ring being polished and the amount of compression being made 15%.

N₁₁₅ is the torque change rate characteristic curve showing the change rate of the torque characteristic curve when used at -30°C with the surface of the O-ring being applied with a pear-skin finish by blasting with #400 grit particle size abrasive material and the amount of compression being made 20%, over the torque characteristic curve when used at 23°C with the surface of the O-ring being polished and the amount of compression being made 20%. N₁₁₆ is the torque change rate characteristic curve showing the change rate of the torque characteristic curve when used at -30°C with the surface of the 0-ring being applied with a pear-skin finish by blasting with #240 grit particle size abrasive material and the amount of compression being made 20%, over the torque characteristic curve when used at 23°C with the surface of the O-ring being polished and the amount of compression being made 20%.

As apparent from comparison between Fig. 11 and Fig. 10, whether the surface of the O-ring is blasted with #400 or #240 grit abrasive material to apply a pear-skin finish, the same kind of effect can be obtained as in the case when the surface of the O-ring is blasted with #320 grit adhesive material to apply a pear-skin finish.

In the above-mentioned embodiments, the viscous fluid was silicon oil, the seal was the O-ring formed of ethylene-propylene rubber having non-swelling property relative to silicon oil. It is possible to obtain the same effect when the seal member is formed of chloroprene rubber or fluorine rubber with the same kind of property. Also, the surface of the seal member was applied with a pear-skin finish by blasting with #400, #320 or #240 grit abrasive material. As long as the viscous fluid is prevented from leaking to the outside of the housing from between the housing (cap) and the rotating shaft, the same effect can be obtained when a pear-skin finish is applied with an abrasive material of another grit.

As described above, the seal member is made of a material having non-swelling property relative to the viscous fluid. Accordingly, it is possible to reduce the torque change caused by the seal member over a temperature change, so that the rotational damper can be used without a problem even in cold regions. Also, the seal member is made of a material having non-swelling property relative to the viscous fluid and the surface of the seal member is applied with a pear-skin finish. Accordingly, it is possible to reduce the torque change caused by the seal member over a temperature change, so that the rotational damper can be used without a problem even in cold regions.

## Claims

1. A rotational damper (D) comprising:
a housing (11),
silicon oil as a viscous fluid (21) filled in the housing,
a rotor (31) rotatably housed in the housing and having a rotating shaft (32) with one end protruding from the housing and a rotor damping plate (35) connected to a lower end of the rotating shaft, and
a seal member (41) disposed between the housing and the rotating shaft for preventing the viscous fluid leaking from the housing,
**characterized in that** said seal member (41) is formed of ethylene-propylene rubber, chloroprene-rubber or fluorine rubber and has a non-swelling property relative to silicon oil as the viscous fluid (21) so as to reduce torque change caused by the seal member.

2. A rotational damper (D) according to claim 1, wherein said seal member is formed of ethylene-propylene rubber.

3. A rotational damper (D) according to claim 1, wherein said seal member is formed of chloroprene-rubber or fluorine rubber.

4. A rotational damper (D) according to any one of claims 1 to 3, wherein said seal member has a surface with projections to provide roughness.

5. A rotational damper (D) according to any one of claims 1 to 4, wherein said housing (1) includes a main body (12) and a cap (16) for enclosing the rotor damping plate and the viscous fluid therein, said rotating shaft passing through the cap, and said seal member is an 0-ring (41) situated between the cap and the rotating shaft.

## Patentansprüche

1. Rotationsdämpfer (D) umfassend:
ein Gehäuse (11),
Silikonöl als ein viskoses Fluid (21), welches in das Gehäuse gefüllt ist,
einen Rotor (31), welcher drehbar in dem Gehäuse untergebracht ist und eine Drehachse (32) mit einem aus dem Gehäuse herausragenden Ende und einer mit einem unteren Ende der Drehachse verbundenen Rotordämpfungsplatte (35) aufweist, und
ein Dichtungsteil (41), welches zwischen dem Gehäuse und der Drehachse angeordnet ist, um zu verhindern, dass das viskose Fluid aus dem Gehäuse entweicht,
**dadurch gekennzeichnet,**
**dass** das Dichtungsteil (41) aus Ethylen-Propylen-Kautschuk, Chloropren-Kautschuk oder Fluorkautschuk gebildet ist und eine nicht aufquellende Eigenschaft gegenüber Silikonöl als dem viskosen Fluid (21) aufweist, um eine durch das Dichtungsteil verursachte Drehmomentänderung zu reduzieren.

2. Rotationsdämpfer (D) nach Anspruch 1, wobei das Dichtungsteil aus Ethylen-Propylen-Kautschuk gebildet ist.

3. Rotationsdämpfer (D) nach Anspruch 1, wobei das Dichtungsteil aus Chloropren-Kautschuk oder Fluorkautschuk gebildet ist.

4. Rotationsdämpfer (D) nach einem der Ansprüche 1 bis 3, wobei das Dichtungsteil eine Oberfläche mit Vorsprüngen aufweist, um eine Rauhigkeit bereitzustellen.

5. Rotationsdämpfer (D) nach einem der Ansprüche 1 bis 4, wobei das Gehäuse (1) einen Hauptteil (12) und einen Deckel (16) beinhaltet, um die Rotordämpfungsplatte und das viskose Fluid darin einzuschließen, wobei die Drehachse durch den Deckel verläuft und das Dichtungsteil ein O-Ring (41) ist, welcher sich zwischen dem Deckel und der Drehachse befindet.

## Revendications

1. Amortisseur rotatif (D) comprenant :
un boîtier (1);
une huile de silicone comme fluide visqueux (21) remplissant le boîtier;
un rotor (31) logé libre en rotation dans le boîtier et ayant un arbre rotatif (3) dont une extrémité dépasse du boîtier ; et
une plaque amortissante de rotor (35) connectée à une extrémité inférieure de l'arbre rotatif ; et
un élément d'étanchéité (41) disposé entre le boîtier et l'arbre rotatif pour empêcher le fluide visqueux de fuir du boîtier,
**caractérisé en ce que** ledit élément d'étanchéité (41) est formé de caoutchouc d'éthylène propylène, caoutchouc de chloroprène ou caoutchouc fluoré et présente une absence de gonflement par rapport à l'huile de silicone comme fluide visqueux (21) de façon à réduire la modification du couple produit par l'élément d'étanchéité.

2. Amortisseur rotatif (D) selon la revendication 1, dans lequel ledit élément d'étanchéité est formé de caoutchouc d'éthylène propylène.

3. Amortisseur rotatif (D) selon la revendication 1, dans lequel ledit élément d'étanchéité est formé de caoutchouc de chloroprène ou caoutchouc fluoré.

4. Amortisseur rotatif (D) selon l'une quelconque des revendications 1 à 3, dans lequel l'élément d'étanchéité présente une surface munie de protubérances pour former une rugosité.

5. Amortisseur rotatif (D) selon l'une quelconque des revendications 1 à 4, dans lequel ledit boîtier (1) comprend un corps principal (12) et un couvercle (16) pour y enfermer à l'intérieur de celui-ci la plaque amortissante de rotor et le fluide visqueux, ledit arbre rotatif traversant le couvercle, et ledit élément d'étanchéité est un joint torique (41) situé entre le couvercle et l'arbre rotatif.
